# EUROPEAN PATENT APPLICATION

(11) **EP 4 647 205 A1**
(43) Date of publication of application: **12.11.2025**
(21) Application number: 24781032.8
(22) Date of filing: 23.02.2024
(51) Int. Cl.: B23K 26/38, B23K 26/60, B23K 26/16, B23K 26/0622, B23K 26/06, B23K 101/36

(54) **CUTTING APPARATUS USING LASER**

(30) Priority: 24.03.2023 KR 20230038716
(71) Applicant: LG Energy Solution, Ltd., Seoul 07335 (KR)
(72) Inventor: SHIN, Sekye, Daejeon 34122 (KR)
(74) Representative: Plasseraud IP
(86) International application number: PCT/KR2024/002388
(87) International publication number: WO 2024/205038

(57) **Abstract**

A laser cutting apparatus according to an embodiment of the present disclosure is an apparatus which cuts a material for secondary battery with a laser, the apparatus comprising: a first laser light source that emits a first laser for cutting the material for secondary battery material; and a second laser light source that emits a second laser for heating a portion where the material is cut, wherein the first laser and the second laser are synchronized and irradiated onto the material in a state where optical paths are combined into one.

## Description

### [TECHNICAL FIELD]

### Cross Citation with Related Application(s)

This application claims the benefit of Korean Patent Application No. 10-2023-0038716 filed on March 24, 2023 with the Korean Intellectual Property Office, the disclosure of which is incorporated herein by reference in its entirety.

The present disclosure relates to a laser cutting apparatus, and more specifically, to a laser cutting apparatus in which the cutting portion is neatly and cleanly processed in the process of cutting a material for secondary battery using a laser, thereby improving the quality of the cutting material.

### [BACKGROUND]

In modern society, as portable devices such as a mobile phone, a notebook computer, a camcorder and a digital camera has been daily used, the development of technologies in the fields related to mobile devices as described above has been activated. In addition, chargeable/dischargeable secondary batteries are used as a power source for an electric vehicle (EV), a hybrid electric vehicle (HEV), a plug-in hybrid electric vehicle (P-HEV) and the like, in an attempt to solve air pollution and the like caused by existing gasoline vehicles using fossil fuel. Therefore, the demand for development of the secondary battery is growing.

Currently commercialized secondary batteries include a nickel cadmium battery, a nickel hydrogen battery, a nickel zinc battery, a lithium secondary battery, and the like. Among them, the lithium secondary battery has come into the spotlight because it has advantages, for example, hardly exhibiting memory effects compared to nickel-based secondary batteries and thus being freely charged and discharged, and having very low self-discharge rate and high energy density.

The manufacturing process of such a lithium secondary battery is roughly classified into an electrode process, an assembly process, and a formation process. The electrode process is again divided into an active material mixing process, an electrode coating process, a rolling process, a slitting process, a winding process, and the like. For example, when cutting electrodes in the slitting process, a press device using a blade may be used, but the electrodes may also be cut using a laser in order to reduce the occurrence of foreign substances and breakage as much as possible.

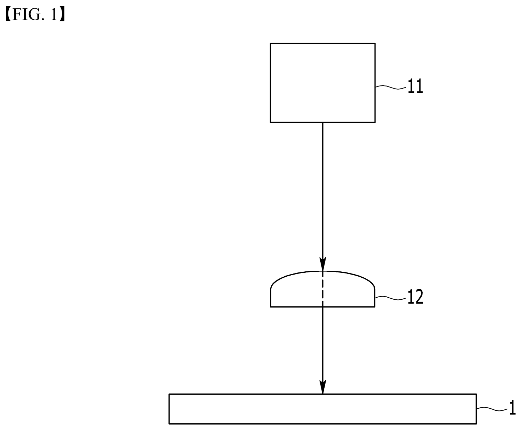

FIG. 1 shows a laser cutting apparatus according to a conventional technique. The laser cutting apparatus includes a laser light source 11 that irradiates a laser to a secondary battery material 1 such as an electrode sheet, and may include a mirror (not shown) and/or a lens 12 on the optical path so as to change and adjust the optical path of a laser light. According to this conventional technique, the laser light source 11 radiates infrared laser. The pulse duration of the laser may be, for example, in picoseconds (ps, 10⁻¹²s).

When cutting secondary battery materials 1 such as electrode sheets using such a laser cutting apparatus, a more effective method for neatly and cleanly processing the cutting portion is required.

### [DETAILED DESCRIPTION OF THE INVENTION]

### [Technical Problem]

It is an object of the present disclosure to provide a laser cutting apparatus in which the cutting portion is neatly and cleanly processed in the process of cutting a material for secondary battery using a laser, thereby improving the quality of the cutting material.

However, the technical problems to be solved by embodiments of the present disclosure are not limited to the above-mentioned problems, and can be variously expanded within the scope of the technical idea included in the present disclosure.

### [Technical Solution]

According to one embodiment of the present disclosure, there is provided a laser cutting apparatus which cuts a material for secondary battery with a laser, the apparatus comprising: a first laser light source that emits a first laser for cutting the material for secondary battery material; and a second laser light source that emits a second laser for heating a portion where the material is cut, wherein the first laser and the second laser are synchronized and irradiated onto the material in a state where optical paths are combined into one.

The second laser may heat the material, thereby increasing the reactivity of the material and removing by-products generated by the cutting.

The first laser may have an ultraviolet band, the second laser may have an infrared band, and the output of the second laser may be smaller than the output of the first laser.

The pulse duration of the second laser may be longer than the pulse duration of the first laser.

The pulse duration of the first laser may have a value from several picoseconds to several thousand picoseconds (ps, 10⁻¹²s) or from several femtoseconds several thousand femtoseconds (fs, 10⁻¹⁵s), and the pulse duration of the second laser may have a value from several nanoseconds to several thousand nanoseconds (ns, 10⁻⁹s).

The first laser and the second laser may be coaxially irradiated onto the material, and the light width of the second laser may be larger than the light width of the first laser.

The laser cutting apparatus further comprises a pulse synchronizing unit coupled to each of the first laser light source and the second laser light source, wherein the pulse synchronizing unit may synchronize the first laser and the second laser emitted respectively from the first laser light source and the second laser light source, and may perform pulse width modulation (PWM).

The laser cutting apparatus comprises an optical splitter that combines the first laser and the second laser emitted respectively from the first laser light source and the second laser light source, onto one optical path, wherein the combined first laser and second laser may be irradiated onto the material.

The optical splitter may transmit the first laser and reflect the second laser.

An angle between the first laser entering the optical splitter and the first laser extracting from the optical splitter may be 180 degrees, and an angle between the second laser entering the optical splitter and the second laser extracting from the optical splitter may be 90 degrees.

The optical splitter may be a planar optical splitter or a cube optical splitter.

The planar optical splitter may be a mirror that transmits the first laser and reflects the second laser.

The laser cutting apparatus further comprises a focusing lens disposed in the optical path between the optical splitter and the material, wherein the focusing lens may focus the first laser and the second laser to irradiate the material in a focused manner.

The focusing lens is provided in at least one, and may include a planar convex lens, a double convex lens, or a meniscus convex lens.

The laser cutting apparatus may further comprise an aperture that adjusts the light width of the second laser.

The laser cutting apparatus further comprises a mirror disposed between the first laser light source and the optical splitter, wherein the mirror may adjust the optical path of the first laser entering the optical splitter.

The laser cutting apparatus further comprises a mirror disposed between the second laser light source and the optical splitter, wherein the mirror adjusts the optical path of the second laser entering the optical splitter.

The material for secondary battery may include at least one of a positive electrode, a negative electrode and a separator of the secondary battery.

### [Advantageous Effects]

According to embodiments of the present disclosure, there is an advantage that the cutting portion (boundary portion of the cutting surface, etc.) can be processed neatly and cleanly in the process of cutting a material for secondary battery.

In addition, by using the laser cutting apparatus according to embodiments of the present disclosure, the quality of electrodes and/or separators, etc. manufactured therefrom can be significantly improved, thereby improving the performance of the manufactured battery.

### [BRIEF DESCRIPTION OF THE DRAWINGS]

FIG. 1 schematically shows a laser cutting apparatus according to a conventional technique.
FIG. 2 schematically shows a laser cutting apparatus according to an embodiment of the present disclosure.
FIG. 3 is a partially enlarged view of the laser cutting apparatus of FIG. 2.
FIG. 4 shows a case where pulses of a first laser and a second laser of the laser cutting apparatus of FIG. 2 are provided in synchronization with each other.
FIG. 5 schematically shows a laser cutting apparatus according to another embodiment of the present disclosure.
FIG. 6 schematically shows a laser cutting apparatus according to another embodiment of the present disclosure.

### [DETAILED DESCRIPTION OF THE EMBODIMENTS]

Hereinafter, various embodiments of the present disclosure will be described in detail with reference to the accompanying drawings so that those skilled in the art can easily carry out them. The present disclosure may be modified in various different ways, and is not limited to the embodiments set forth herein.

Portions that are irrelevant to the description will be omitted to clearly describe the present disclosure, and like reference numerals designate like elements throughout the description.

Further, in the drawings, the size and thickness of each element are arbitrarily enlarged or reduced for convenience of description, and thus, it is obvious that the present disclosure is not necessarily limited to those illustrated in the drawings. In the drawings, the thickness of some layers, regions, etc. are exaggerated for clarity . In the drawings, the thicknesses of some layers and region are exaggerated for convenience of description.

In addition, it will be understood that when an element such as a layer, film, region, or plate is referred to as being "on" or "above" another element, it can be directly on the other element or intervening elements may also be present. In contrast, when an element is referred to as being "directly on" another element, it means that other intervening elements are not present. Further, a certain portion being located "above" or "on" a reference portion means the certain portion being located above or below the reference portion and does not particularly mean the certain portion "above" or "on" toward an opposite direction of gravity. Meanwhile, similar to the case where it is described as being formed or located "on" or "above" another part, the case where it is described as being formed or disposed "below" or "under" another part will also be understood with reference to the above-mentioned contents.

Further, since the upper surface/lower surface of a specific member can be determined differently depending on which direction is used as a reference, throughout the description, 'upper surface' or 'lower surface' is defined as meaning two facing surfaces on the z-axis of the corresponding member.

Further, throughout the description, when a portion is referred to as "including" or "comprising" a certain component, it means that the portion can further include other components, without excluding the other components, unless otherwise stated.

Further, throughout the description, when referred to as "planar", it means when a target portion is viewed from the upper side, and when referred to as "cross-sectional", it means when a target portion is viewed from the side of a cross section cut vertically.

Now, a laser cutting apparatus according to an embodiment of the present disclosure will be described.

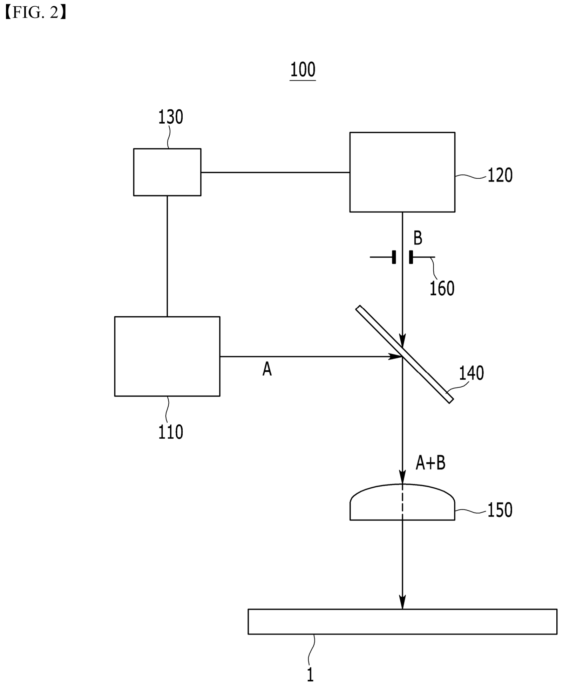

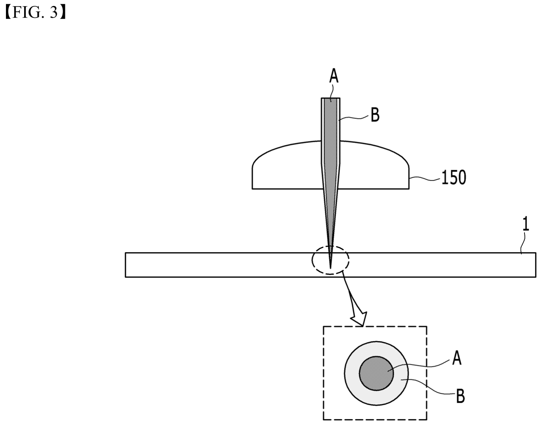

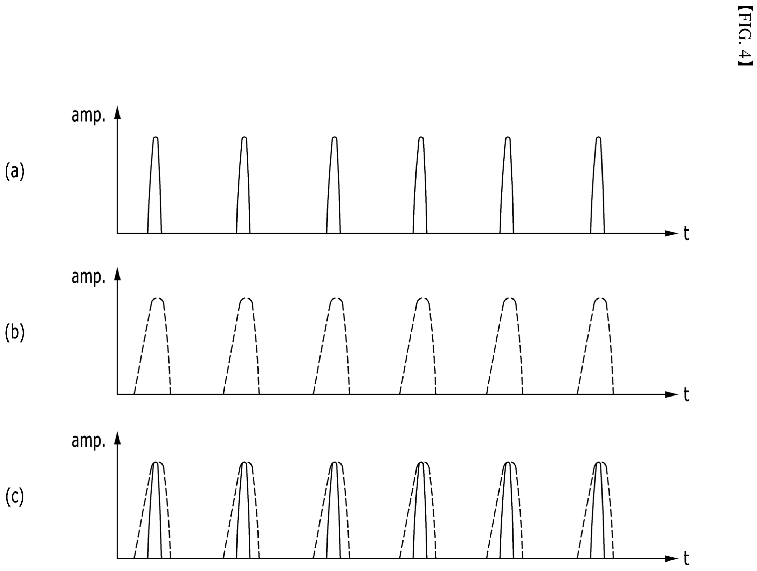

FIG. 2 schematically shows a laser cutting apparatus 100 according to an embodiment of the present disclosure. FIG. 3 is a partially enlarged view of the laser cutting apparatus 100 of FIG. 2. FIG. 4 shows a case where pulses of a first laser A and a second laser B of the laser cutting apparatus 100 of FIG. 2 are provided in synchronization with each other.

The laser cutting apparatus 100 according to an embodiment of the present disclosure includes at least two laser light sources having different bands of wavelengths. FIG. 2 shows a case where the laser cutting apparatus 100 includes a first laser light source 110 and a second laser light source 120 as an embodiment of the present disclosure.

First, the material 1 for secondary battery material that can be cut with the material cutting apparatus according to embodiments of the present disclosure may be, for example, an electrode sheet and/or a separator sheet. The electrode according to the present disclosure may be a positive electrode or a negative electrode. That is, the material cutting apparatus according to embodiments of the present disclosure is not particularly limited to the positive electrode and the negative electrode, can be easily applied even to the cutting of any electrode, and can manufacture different electrodes depending on the material (e.g., positive electrode active material or negative electrode active material) used in the manufacture of each electrode. Similarly, the material cutting apparatus according to embodiments of the present disclosure can be applied without being particularly limited to the type of the separator (type depending on components, materials, etc.), and can be easily applied even to the cutting of any separator. In addition, the material cutting apparatus according to embodiments of the present disclosure is not limited to those mentioned above, and can be applied to a wide variety of materials as long as they are used in the manufacture of secondary batteries.

The first laser light source 110 emits a first laser A for cutting the material 1 for secondary battery. The first laser light source 110 emits, for example, a first laser A in the ultraviolet band. The pulse duration of the first laser A may be, for example, in picoseconds (ps, 10⁻¹²s) or femtoseconds (fs, 10⁻¹⁵s). That is, the pulse duration of the first laser A has a value from several picoseconds to several thousand picoseconds (ps, 10⁻¹²s) or from several femtoseconds to several thousand femtoseconds (fs, 10⁻¹⁵s).

For reference, such a femtosecond laser means a laser having a very short pulse width (duration) of femtoseconds, and the picosecond laser means a laser having a very short pulse width (duration) of picoseconds. If the short pulse width and high peak output characteristics of such femtosecond lasers or picosecond lasers are used for laser processing, the time of the irradiated laser pulse is shorter than the thermal diffusion time of the material to be processed, which enables non-thermal processing without thermal degeneration of the material.

In addition, when using such femtosecond lasers or picosecond lasers, they produce a large peak output with relatively less energy than a conventional continuous wave or nanosecond laser, and thus, impact applied to the processed sample is low, which enables high-quality, ultra-precision micro-processing.

The second laser light source 120 emits a second laser B for heating a portion where the secondary battery material 1 is cut (cutting portion). The second laser B is synchronized with the first laser A and irradiated onto the material 1 in a state where the optical paths are combined into one (see FIG. 4), as will be described later. By heating the material 1 with the second laser B, the reactivity (electronic reactivity, etc.) is improved. Moreover, by-products resulting from cutting by the first laser A are removed by reaction with the second laser B, so that the cutting portion of the material 1 is processed neatly and cleanly.

The second laser light source 120 emits, for example, a second laser B in the infrared band. The second laser B heats a portion where the material 1 is cut, whereby the second laser light source 120 has lower output than the first laser light source 110 that emits the first laser A, which is a cutting laser. Further, the pulse duration of the second laser B may be, for example, in nanoseconds (ns, 10⁻⁹s). That is, the pulse duration of the second laser B has a value from several nanoseconds to several thousands of nanoseconds (ns, 10⁻⁹s).

Meanwhile, in one embodiment of the present disclosure, the first laser light source 110 and the second laser light source 120 are respectively connected to the pulse synchronizing unit 130. The pulse synchronizing unit 130 delays and synchronizes the first laser A and the second laser B emitted respectively from the first laser light source 110 and the second laser light source 120, and then inputs a pulse width modulation signal (BMW) to each of the first laser A and the second laser B. That is, an external trigger signal is input to each of the first laser A and the second laser B, and the first laser A and the second laser B are emitted in the form of a PWM signal. Thereby, as shown in FIG. 4, it is possible to obtain the first laser A and second laser B pulses that are synchronized with each other.

When such pulse-synchronized first laser A and second laser B are irradiated onto the material 1, the material 1 is cut by the first laser A, and simultaneously, by-products caused by the cutting of the material 1 are heated and removed by the second laser B, thereby improving the quality of the cutting material 1.

Meanwhile, as mentioned above, in order to ensure that the first laser A and the second laser B may be synchronized and emitted, and simultaneously irradiated onto the same portion of the material 1, it is necessary to combine the optical path of the first laser A and the optical path of the second laser B into one. The laser cutting apparatus 100 according to an embodiment of the present disclosure includes an optical splitter 140 disposed on an optical path extending from the first laser light source 110 and the second laser light source 120 to the focusing lens 150, which will be described later.

The optical splitter 140 combines the first laser A and the second laser B emitted respectively from the first laser light source 110 and the second laser light source 120, onto one optical path. The combined first laser A and second laser B are irradiated onto the material 1.

For example, the light splitter 140 reflects the first laser A for cutting the material 1 and transmits the second laser B for heating a portion where the material 1 is cut. FIG. 2 shows a case where a planar optical splitter 140 is included. For example, the optical splitter 140 may be implemented as a mirror, and depending on the degree of coating of the reflective surface, it may reflect the first laser A, but may transmit the second laser B having a wavelength band different therefrom. Thereby, as shown in FIG. 3, the first laser A and the second laser B may be irradiated onto the same portion (the portion to be cut) of the material 1.

First, in order to transmit the second laser B through the optical splitter 140, the angle between the paths of the second laser B entering the optical splitter 140 and the path of the second laser B extracting from the optical splitter 140 is 180 degrees (i.e., a straight line). Meanwhile, in order to ensure that the optical splitter 140 reflects the first laser A and combines the optical path with the second laser B, the angle between the path of the first laser A entering the optical splitter 140 and the path of the first laser A extracting from the optical splitter 140 is 90 degrees (i.e., a right angle).

In addition, the laser cutting apparatus 100 according to an embodiment of the present disclosure includes a focusing lens 150. The focusing lens 150 may be disposed in the optical path between the light splitter 140 and the material 1. The focusing lens 150 allows the first laser A and the second laser B, whose optical paths are combined by the optical splitter 140, to be focused and irradiated onto the material 1.

The focusing lens 150 focuses the first laser light source 110 and the second laser light source 120, and the first laser A and second laser B emitted respectively from them, and irradiates onto the material 1. The focal length and size (shape) of the first laser A and the second laser B, whose optical paths are combined into one, to the material 1 can be adjusted by the focusing lens 150. That is, not only the light width of the first laser A and the second laser B irradiated onto the material 1 by the focusing lens 150 can be adjusted, but also the height of the laser spot focused through the focusing lens 150 relative to the material 1 can be adjusted.

The focusing lens 150 may be, for example, a planar convex lens in which one surface is convex and the other surface is flat as shown in FIG. 2, but the present disclosure is not limited to those shown in the figure, and various modifications and changes can be made, for example, it may be a double-convex lens whose both surfaces are convex, or a meniscus convex lens whose one surface is convex and the other surface is concave. The focusing lens 150 may be provided in one number as shown in FIG. 2, but various combinations can be made, for example, a plurality of focusing lenses of the same type may be provided to suit the various environments in which the invention is implemented, and the focusing lenses of different types may also be provided in plural numbers.

In addition, the present disclosure is not limited to those shown in the figure, and in some cases, various modifications and changes may be made, such as being able to further include a concave lens and/or lens in the optical path between the focusing lens 150 and the material 1.

FIG. 3 shows a cross section of a laser spot where the first laser A and the second laser B irradiated onto the material 1 are focused. The light width (cross section) of the second laser B for heating the by-products of a portion where the material 1 is cut is larger than the light width (cross section) of the first laser A for cutting the material 1. Preferably, the first laser A and the second laser B, whose optical paths are combined into one, may be formed coaxially as shown in FIG. 3.

The respective light widths of the first laser A and the second laser B may be determined only by the light widths when emitted from the first laser light source 110 and the second laser light source 120, but in some cases, the light widths may be adjusted by providing an aperture, a lens, etc. on a single optical path of each of the first laser A and the second laser B.

In this regard, FIG. 2 shows a case where an aperture 160 is provided on a single optical path of the second laser B, namely, a case where the light width of the second laser B is adjusted depending on the light width of the aperture of the aperture 160.

FIG. 4 shows a case where respective pulses of the first laser and the second laser of the laser cutting apparatus 100 of FIG. 2 are provided in synchronization with each other.

More specifically, FIG. 4(a) shows a graph of pulse versus time t of the first laser A, FIG. 4(b) shows a graph of pulse versus time t of the second laser B, and FIG. 4(c) shows a graph of pulse versus time (t) when the first laser A and the second laser B are combined. In FIGS. 4(a) to 4(c), the x-axis means time t, and the y-axis means amplitude. The pulse duration of the second laser B is longer than the pulse duration of the first laser A.

As mentioned above in FIG. 2, the pulse duration of the first laser A may be, for example, in picoseconds (ps, 10⁻¹²s) or femtoseconds (fs, 10⁻¹⁵s). The pulse duration of the second laser B may be, for example, in nanoseconds (ns, 10⁻⁹s).

In addition, as mentioned above, the pulse synchronizing unit 130 delays and synchronizes the first laser A and the second laser B emitted respectively from the first laser light source 110 and the second laser light source 120, and then input a pulse width modulation signal (PWM) to each of the first laser A and the second laser B. Thereby, as shown in FIG. 4, it is possible to obtain the first laser A and second laser B pulses that are synchronized with each other.

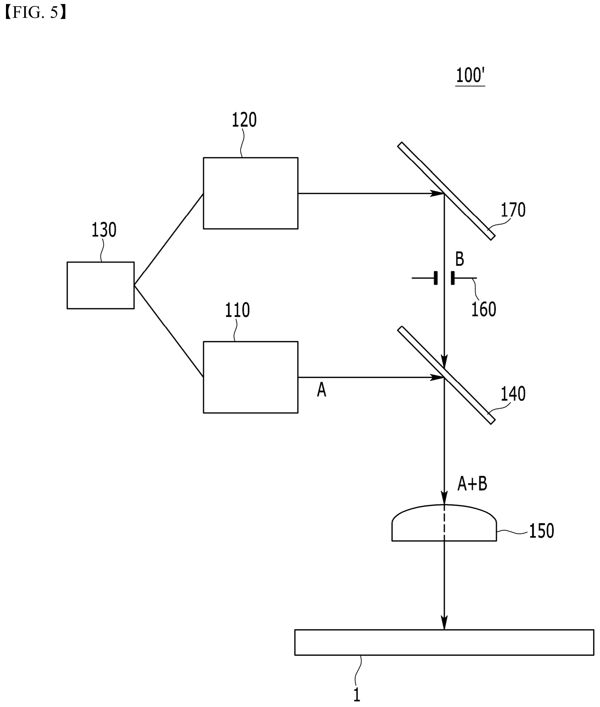

FIG. 5 schematically shows a laser cutting apparatus according to another embodiment of the present disclosure.

The laser cutting apparatus 100' of FIG. 5 is a case where the laser cutting apparatus 100 of FIG. 2 is partially modified, and may include a mirror 170 for adjusting (changing) the optical paths of the first laser A and/or the second laser B between each of the first laser light source 110 and/or the second laser light source 120 and the optical splitter 140.

As mentioned above, in order to transmit the second laser B through the optical splitter 140, the second laser B entering the optical splitter 140 and the second laser B extracting from the optical splitter 140 must form an angle of 180 degrees (i.e., a straight line). Meanwhile, in order for the optical splitter 140 to reflect the first laser A and combine the optical path with the second laser B, the first laser A entering the optical splitter 140 and the first laser A extracting from the optical splitter 140 must form an angle of 90 degrees (i.e., a right angle).

If the first laser light source 110 and/or the second laser light source 120 are not located on an extension of the optical path entering the optical splitter 140 described above, the optical path entering the optical splitter 140 needs to be changed. Therefore, a mirror or the like for changing the optical path may be included between the optical path between the first laser light source 110 and the optical splitter 140 and/or the optical path between the second laser light source 120 and the optical splitter 140.

FIG. 5 exemplarily shows a case where a mirror 170 for changing the path of the second laser B emitted from the second laser light source 120 is included because the second laser light source 120 is not located on the extension of the optical path entering the optical splitter 140. However, the present disclosure is not limited to those shown in FIG. 2, and when the first laser light source 110 and/or the second laser light source 120 are not located on the extension of the optical path that enters the optical splitter 140 as described above, it may be applied by making various modifications and changes.

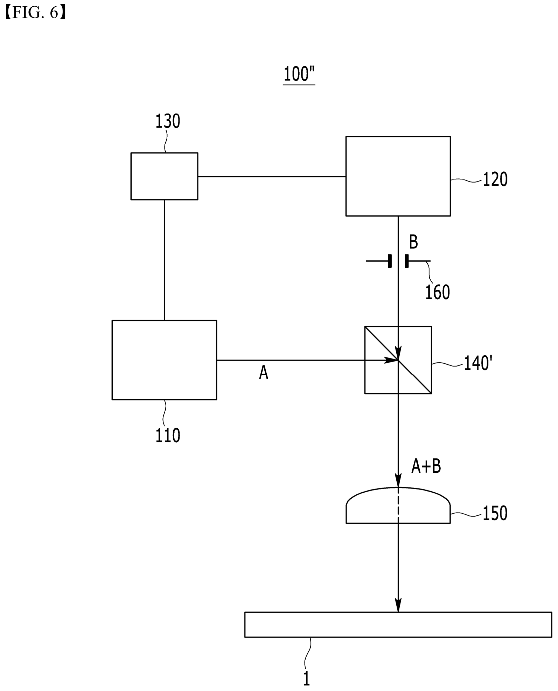

FIG. 6 schematically shows a laser cutting apparatus according to another embodiment of the present disclosure.

The laser cutting apparatus 100" in FIG. 6 is a case wherein the laser cutting apparatus 100 of FIG. 2 is partially modified, which shows a case where a cube optical splitter 140' is included instead of the planar optical splitter 140.

The cube optical splitter 140 has only some differences in shape from the planar optical splitter 140, and is the same as the principle of the planar light splitter 140, Thereby, for the details regarding the optical path in which the first laser A and the second laser B emitted respectively from the first laser light source 110 and the second laser light source 120 are combined by a cube optical splitter 140' and moved to a focusing lens 150, refer to those described above in FIG. 2 and its modified example, FIG. 3.

The description regarding the remaining components in FIG. 6 overlaps with those described above in FIG. 2, and therefore, for the details thereof, refers to FIG. 2.

According to the embodiments of the present disclosure, the reactivity (electronic reactivity, etc.) of the material is increased by heating the material with a heating laser (second laser B) in the process of cutting the material for secondary battery, and by-products generated by the cutting are removed by heating. Thereby, there is an advantage that the cutting portion (boundary portion of the cutting surface, etc.) can be processed neatly and cleanly. In addition, the quality of electrodes and/or separators manufactured therefrom can be significantly improved, thereby improving the performance of the manufactured battery.

The terms representing directions such as the front side, the rear side, the left side, the right side, the upper side, and the lower side have been used in the present embodiment, but the terms used are provided simply for convenience of description and may become different according to the position of an object, the position of an observer, or the like.

The electrode manufactured by applying the control method of the electrode manufacturing apparatus according to the present embodiment described above may be included in a secondary battery, and a plurality of such secondary batteries may be gathered together to form a battery module. The battery modules can be mounted together with various control and protection systems such as a BMS (battery management system) module, and a cooling system to form a battery pack.

The secondary battery, the battery module or the battery pack can be applied to various devices. Specifically, it can be applied to vehicle means such as an electric bike, an electric vehicle, and a hybrid electric vehicle, or an ESS (Energy Storage System) and may be applied to various devices capable of using a secondary battery, without being limited thereto.

Although the invention has been described in detail with reference to preferred embodiments thereof, the scope of the present disclosure is not limited thereto, and various modifications and improvements can be made by those skilled in the art using the basic concepts of the present disclosure, which are defined in the appended claims, which also falls within the scope of the present disclosure.

### [Description of Reference Numerals]

A: first laser
B: second laser
100, 100', 100": laser cutting apparatus
110: first laser light source
120: second laser light source
130: pulse synchronizing unit
140, 140': optical splitter
150: focusing lens
160: aperture
170: mirror

## Claims

1. A laser cutting apparatus which cuts a material for secondary battery with a laser, the apparatus comprising:
a first laser light source that emits a first laser for cutting the material for secondary battery material; and
a second laser light source that emits a second laser for heating a portion where the material is cut,
wherein the first laser and the second laser are synchronized and irradiated onto the material in a state where optical paths are combined into one.

2. The laser cutting apparatus according to claim 1, wherein:
the second laser heats the material, thereby increasing the reactivity of the material and removing by-products generated by the cutting.

3. The laser cutting apparatus according to claim 1, wherein:
the first laser has an ultraviolet band,
the second laser has an infrared band, and
the output of the second laser is smaller than the output of the first laser.

4. The laser cutting apparatus according to claim 3, wherein:
the pulse duration of the second laser is longer than the pulse duration of the first laser.

5. The laser cutting apparatus according to claim 4, wherein:
the pulse duration of the first laser has a value from several picoseconds to several thousand picoseconds (ps, 10⁻¹²s) or from several femtoseconds to several thousand femtoseconds (fs, 10⁻¹⁵s), and
the pulse duration of the second laser has a value from several nanoseconds to several thousand nanoseconds (ns, 10⁻⁹s).

6. The laser cutting apparatus according to claim 1, wherein:
the first laser and the second laser are coaxially irradiated onto the material, and the light width of the second laser is larger than the light width of the first laser.

7. The laser cutting apparatus according to claim 1,
further comprising a pulse synchronizing unit coupled to each of the first laser light source and the second laser light source,
wherein the pulse synchronizing unit synchronizes the first laser and the second laser emitted respectively from the first laser light source and the second laser light source, and performs pulse width modulation (PWM).

8. The laser cutting apparatus according to claim 1,
comprising an optical splitter that combines the first laser and the second laser emitted respectively from the first laser light source and the second laser light source, onto one optical path,
wherein the combined first laser and second laser are irradiated onto the material.

9. The laser cutting apparatus according to claim 8, wherein:
the optical splitter transmits the first laser and reflects the second laser.

10. The laser cutting apparatus according to claim 8, wherein:
an angle between the first laser entering the optical splitter and the first laser extracting from the optical splitter is 180 degrees, and
an angle between the second laser entering the optical splitter and the second laser extracting from the optical splitter is 90 degrees.

11. The laser cutting apparatus according to claim 8, wherein:
the optical splitter is a planar optical splitter or a cube optical splitter.

12. The laser cutting apparatus according to claim 11, wherein:
the planar optical splitter is a mirror that transmits the first laser and reflects the second laser.

13. The laser cutting apparatus according to claim 8,
further comprising a focusing lens disposed in the optical path between the optical splitter and the material,
wherein the focusing lens focuses the first laser and the second laser to irradiate the material in a focused manner.

14. The laser cutting apparatus according to claim 13, wherein:
the focusing lens is provided in at least one, and includes a planar convex lens, a double convex lens, or a meniscus convex lens.

15. The laser cutting apparatus according to claim 1,
further comprising an aperture that adjusts the light width of the second laser.

16. The laser cutting apparatus according to claim 1,
further comprising a mirror disposed between the first laser light source and the optical splitter,
wherein the mirror adjusts the optical path of the first laser entering the optical splitter.

17. The laser cutting apparatus according to claim 1,
further comprising a mirror disposed between the second laser light source and the optical splitter,
wherein the mirror adjusts the optical path of the second laser entering the optical splitter.

18. The laser cutting apparatus according to claim 1, wherein:
the material for secondary battery includes at least one of a positive electrode, a negative electrode and a separator of the secondary battery.
